# EUROPEAN PATENT SPECIFICATION

(11) **EP 3 288 393 B1**
(45) Date of publication and mention of the grant of the patent: **11.11.2026**
(21) Application number: 16787159.9
(22) Date of filing: 28.04.2016
(51) Int. Cl.: A23K 50/48, A23K 10/20, A23K 10/30, A23K 10/16, A23K 10/24, A23K 10/26, A23K 20/163, A23K 20/147, A23K 40/00, A23K 50/40, A23K 40/10

(54) **WET PET FOOD PRODUCT COMPRISING A COMPOSITE MEAT PRODUCT**
HAUSTIERNASSFUTTERPRODUKT MIT EINEM ZUSAMMENGESETZTEN FLEISCHPRODUKT
PRODUIT ALIMENTAIRE CRU POUR ANIMAUX DOMESTIQUES COMPRENANT UN PRODUIT COMPOSITE À BASE DE VIANDE

(30) Priority: 28.04.2015 EP 15165404
(43) Date of publication of application: 07.03.2018
(73) Proprietor: Mars, Incorporated, McLean, VA 22101 (US)
(72) Inventor: MAO, Mathieu, 27283 Verden (DE); BECKMANN, Christoph, Hendrik, 27283 Verden (DE); PANNEVIS, Marinus, 27283 Verden (DE); OLIVARES, Alicia, 27283 Verden (DE); SCHUETZ, Nadine, 27283 Verden (DE)
(74) Representative: Haseltine Lake Kempner LLP
(86) International application number: PCT/US2016/029813
(87) International publication number: WO 2016/176465

(56) References cited:
- EP-A1- 0 241 097
- EP-A1- 0 241 097
- EP-A2- 0 008 728
- FR-A5- 2 034 080
- JP-A- 2004 121 022
- US-A- 4 169 162
- US-A- 4 895 731
- US-A- 4 895 731
- US-A1- 2011 200 707
- US-A1- 2014 154 390
- US-A1- 2014 170 268
- US-A1- 2020 253 243
- US-B1- 6 582 740
- US-B2- 9 968 115
- "Veal and Chicken Meat in Jelly for Puppies", 1 January 2015 (2015-01-01), XP002746807, Retrieved from the Internet <URL:http://www.gnpd.com/sinatra/recordpage/2922093/from_search/HxraPxcAb8/> [retrieved on 20150101]
- "Chicken Flavour Gravy", 1 May 2006 (2006-05-01), XP002746808, Retrieved from the Internet <URL:http://www.gnpd.com/sinatra/recordpage/535936/from_search/HxraPxcAb8/> [retrieved on 20060501]
- HIROSHI SUGIMOTO: "SYNERGISTIC EFFECT OF ETHANOL AND SODIUM CHLORIDE ON AUTOLYSIS OF BAKER'S YEAST FOR PREPARING FOOD-GRADE YEAST EXTRACTS", JOURNAL OF FOOD SCIENCE, vol. 39, no. 5, 1 September 1974 (1974-09-01), US, pages 939 - 942, XP093154072, ISSN: 0022-1147, DOI: 10.1111/j.1365-2621.1974.tb07281.x

## Description

### FIELD

A wet pet food product is provided, more particularly to a wet pet food product comprising 20-100 wt.% of a composite meat product and 0-80 wt.% of sauce (e.g. gravy, jelly or mousse). The composite meat product contains vegetable material and is produced by heat-setting an emulsion containing ground animal material, vegetable material and heat-settable binder. The wet pet food product further contains 0.2 -3 wt.% of yeast extract.
Processes of making the aforementioned wet pet food product and to the use of said wet pet food product for feeding a companion animal are also provided. The invention is defined by the appended claims.

### BACKGROUND

Pet food is commonly categorized on the basis of its moisture content:
(1) Dry or low moisture content products (typically less than 15%). These products typically combine high nutritional content with convenience;
(2) Wet or high moisture content products (greater than about 50%). These products are generally most palatable to pets;
(3) Semi-moist or semi-dry or soft dry or intermediate or medium moisture content products (generally between 15 and 50%).

Two main types of wet pet food products are distinguished. The first type is known as 'paté' or 'loaf' and is typically prepared by processing a mixture of edible components under heat to produce a homogeneous semi-solid mass that is structured by heat-coagulated protein. This homogeneous mass is usually packaged into single serve or multi serve packaging which is then sealed and sterilized. Upon packing, the homogeneous mass assumes the shape of the container.

The second type of wet pet food product is known as 'chunk and gravy', 'chunk and jelly' or 'chunk and mousse', depending on the nature of the sauce component. These types of products are referred to herein as 'chunk and sauce' products. The chunks comprise meat pieces or restructured meat pieces. Restructured meat pieces are typically prepared by making a meat emulsion containing a heat-settable component, and by applying thermal energy to 'set' the emulsion and allowing it to assume the desired shape. The product pieces are combined with a sauce (e.g. gravy, jelly or mousse) in single serve or multi serve packaging which is then sealed and sterilized. As opposed to paté or loaf, when served, the chunk and sauce product flows out of the packaging and can be easily mixed with other pet food products.

Many wet pet food products contain considerable amounts of meat and animal by-products. Animal by-products are the entire bodies or parts of bodies of animals or products of animal origin not intended for human consumption, including ova, embryos and sperm. Animal by-products include, among others, carcasses, body parts of animals, viscera and products or foods of animal origin originally meant for human consumption but withdrawn for commercial reasons.

Reconstitution of low-grade meats, including animal by-products, into aesthetically pleasing restructured meat pieces (chunks) is a key feature of most wet pet food products. A widely used technology relies on the heat setting of meat proteins and the addition of heat-settable binders. Soluble meat proteins coagulate and create a strong matrix when heated above 80 °C. For pet food production, however, it is difficult to find suitable meats at a realistic price. Hence, additives such as dried blood plasma and other heat setting binders are included to give sufficient chunk strength.

Some elements used in the manufacture of composite meat products through heat setting include:
- fine grinding to minimize bone particle and meat fiber size;
- no ice in the final meat emulsion to ensure all water is bound during cooking
- no local overheating in grinders to avoid pre-coagulation of meat proteins
- temperature control of the meat emulsion before, during and after the emulsification process to maximize water bind and emulsion stability;
- minimum temperature of 85 °C after cooking to ensure all meat proteins are coagulated.

Vegetable materials are sometimes incorporated in composite meat products in order to reduce cost and/or to increase the nutritional value of the pet food product. US 4,895,731, for instance, describes a process of preparing a meat and gravy pet food comprising:
a) preparing a slurry comprising soybean flour, dry blood plasma, liver, and other ingredients as necessary to achieve a total fat content of at least 6% and a total meat content of at least 75%;
b) subjecting the slurry to agitation and cutting sufficient to produce a fine meat emulsion;
c) forming a sheet of emulsion;
d) heating the sheet of emulsion to an internal temperature of at least 170°F (77°C);
e) cutting the sheet into discrete meaty pieces;
f) feeding said meaty pieces and a clear free-flowing gravy into a can; and
g) closing and retorting said can.
The examples of the US patent describe meat and gravy pet foods containing 52% meaty pieces and 48% gravy, said meaty pieces containing 83-84 wt.% ground animal material; 6-7 wt.% defatted soy flour and 4.5-5 wt.% powdered blood plasma

A drawback of the application of vegetable materials in wet pet food product is the adverse impact on the palatability of the product.

It is known in the art to employ yeast extract in pet food.

EP-A 0 241 097 describes a liquid food product on dairy basis for cats comprising 1.5-3.5% by weight of lactose and 3.5-5.0% by weight of protein based on the total product, and fat. The examples of the European patent application describe liquid food products containing yeast extract.

US 4,070,490 describes a process for preparing a liver-like pet food which comprises:
- preparing an aqueous reaction mixture of emulsified fat, whole blood, and a reducing sugar; and
- heating the reaction mixture for a time and at a temperature effective to solidify the mixture and produce a textured, liver-like material.
The examples describe the preparation of live-like pet food from a mixture comprising tallow, water, dried blood, glucose and yeast extract.

JPH03206853 describes the preparation of pet food kibbles by extruding a composition containing cereal flours, meat meal, fish meal, wheat germ, brewer's yeast, vitamins, minerals and water; drying the extrudate; and coating the dried extrudate with beef tallow and yeast extract.

US 2011/0159149 describes a palatability enhancing composition that can be applied to a surface of a companion animal food, said composition comprising at least one palatant and/or at least one tastant modified by glycerol and/or propylene glycol. The palatant may be selected from the group consisting of phosphates, pyrophosphates, proteins, protein hydrolysates, biological extracts, dried yeast, yeast extracts, peptones and combinations thereof.

JP 2004/121022 describes a pet food composition that contains, as an active ingredient, yeast extract to which flavour is imparted by heating at proper temperatures (70-100 °C).

Ogoshi et al., Acidifying and yeast extract in diets for adults cats, Animal Science Journal (2014) 85, 555-561 describe the outcome of a study in which the authors evaluated the effects of adding an acidifying agent based on phosphoric acid (A), a yeast extract from a specific strain *(Saccharomyces cerevisiae)* (Y) and the combination of these two additives in food for adult cats. Results of this study showed that the isolated use of 0.6% A or 1.5% Y in diets for cats is not recommended. However, the association of these two additives was beneficial in increasing nutrient digestibility.

Teshima et al. (Yeast extract in dogs feeding: digestibility and palatability, 44th Annual meeting of the Brazilian Zootechny Society, Unep-Jaboticabal 24-27 July 2006) describe the outcome of experiments in which 2% yeast extract (Nupro^{®} 2000) was added to extruded dog food to replace corn gluten. Dogs were found to prefer the yeast extract containing product over the reference product.

WO 2014/098193 describes a pet food comprising:
- at least one kind of protein selected from the group consisting of animal proteins and vegetable proteins;
- at least one kind of fat or oil selected from the group consisting of animal fats and oils and vegetable fats and oils;
- defatted sesame; and
- at least one kind of palatability enhancing agent selected from the group consisting of meat extracts, fish extracts, internal organ extracts, yeast extracts, processed milk products and hydrolysates thereof.
US4169162 A describes a soft-moist, heat treated, environmentally stable animal food product. FR2034080 A5 describes a cat food composition. EP0241097 A1 discusses a liquid food product on dairy basis for cats. US 2014/154390 A1 describes pseudo-loaf food compositions comprising meat analog chunks and gravy.

### SUMMARY

The wet pet food products provided herein comprise a composite meat product that contains ground animal material in combination with a substantial amount of vegetable material and a heat-settable binder. Surprisingly, despite the presence of vegetable material, the wet pet food product has excellent palatability due to the addition of a small quantity of yeast extract.

In a first aspect, a wet pet food product is provided comprising 20-100 wt.% of a composite meat product and 0-80 wt.% of a sauce, said composite meat product containing:
- 50-92 wt.% of ground animal material, said animal material being selected from meat, animal by-products and combinations thereof;
- 1-15 wt.% of vegetable material; and
- 1-8 wt.% of heat-settable binder;
wherein the wet pet food product contains 0.2 3.0 wt.% of yeast extract; and wherein the vegetable material is obtained from cereal; and wherein the pet food product contains yeast extract and vegetable material in a weight ratio of yeast extract to vegetable material in the range of 1:5 to 1:1. The yeast extract may be obtained from different types of yeast, such as *Saccharomyces, Pichia, Kluyveromyces, Hansenula, Candida.* Desirably, the yeast extract is obtained from a *Saccharomyces* yeast, and in some embodiments, is obtained from *Saccharomyces cerevisiae.*

Unexpectedly, it was found that incorporation of small quantities of yeast extract in wet pet food products comprising a composite meat product containing a substantial amount of vegetable material brings such pet food products closer to the organoleptic properties of wet pet food products made without or with a lower amount of vegetable material. The improved palatability of the wet pet food product of the present invention can suitably be demonstrated in a test wherein the total amount of eaten product is monitored and compared to suitable reference products.

Another aspect concerns the use of the aforementioned wet pet food product for feeding a companion animal, e.g. a companion animal selected from cats and dogs.

Yet another aspect relates to a process of preparing a wet pet food product comprising a composite meat product according to any one of the preceding claims, the process comprising:
- grinding pieces of animal material to prepare ground animal material, said animal material being selected from meat, animal by-products and combinations thereof;
- mixing the ground animal material with a vegetable material, heat-settable binder and optionally further pet food components, to prepare a slurry;
- subjecting the slurry to conditions of shear to produce an emulsion;
- forming a layer of the emulsion;
- heating the layer of emulsion to an internal temperature of at least 70°C;
- cutting or shredding the heated layer into discrete pieces of composite meat product.

### DETAILED DESCRIPTION

The wet pet food product described herein may suitably be prepared without any ingredient or component which is not specifically disclosed herein, and further, may consist essentially of, or consist of, all, some number of or only the components described herein.

A wet pet food product is provided, comprising 20-100 wt.% of a composite meat product and 0-80 wt.% of a sauce, said composite meat product containing:
- 50-92 wt.% of ground animal material, said animal material being selected from meat, animal by-products and combinations thereof;
- 1-15 wt.% of vegetable material; and
- 1-8 wt.% of heat-settable binder;
wherein the wet pet food product contains 0.1-3.0 wt.% of yeast extract; and wherein the vegetable material is obtained from cereal; and wherein the pet food product contains yeast extract and vegetable material in a weight ratio of yeast extract to vegetable material in the range of 1:5 to 1:1. The wet pet food product may suitably comprise, consist essentially of, or consist of a composite meat product and yeast extract. The wet pet food product may also suitably comprise, consist essentially of, or consist of a composite meat product, a sauce and yeast extract. The term "pet" as used herein refers to a domestic animal, including companion animals such as domestic cats and dogs.

The term "pet food" as used herein refers to a food composition designed for ingestion by a pet. The wet pet food provided herein typically is a nutritionally balanced food product to provide a pet with all the essential nutrients it needs in the right quantities.

The term "sauce" as used herein refers to an aqueous composition in the form of a fluid, a paste, a gel or a mousse.

The term "animal protein" as used herein refers to proteins that originate from vertebrates, such as mammals, fowl and fish. Animal protein may originate, for example, from muscle meat, organs, tendons or bone. Proteins originating from milk or eggs are not considered animal proteins.

The term "vegetable material" as used herein refers to a material that largely consists of protein and/or starch and that originates from edible plants or edible plant parts. Examples of suitable vegetable materials include protein concentrates and flours.

The term "flour" or "vegetable flour" as used herein refers to a particulate material that has been prepared by grinding or comminuting a vegetable material.

The term "vegetable protein concentrate" as used herein refers to a material that is extracted or prepared from vegetable matter and that is enriched in protein relative to the original vegetable matter. The term "vegetable protein concentrate" encompasses vegetable protein isolates, such a soy protein isolate.

The term "vegetable protein" as used herein refers to protein that originates from edible plants or edible plants parts. The term "vegetable protein" encompasses proteins from fruits, grains and nuts.

The term "legume" as used herein refers to a plant in the family *Fabaceae* (or *Leguminosae),* or the fruit or seed of such a plant. Well-known legumes include alfalfa, clover, peas, beans, lentils, lupins, mesquite, carob, soybeans, peanuts, and tamarind.

The term "fat" as used herein refers to esters of fatty acids such as triglycerides, diglycerides, monoglycerides and phospholipids.

The term "yeast extract" as used herein refers to a yeast product made by extracting the cell contents from yeast (removing the cell walls).

The wet pet food products of the present invention and the components used therein are selected for consumption by a pet and are not intended for consumption by humans. The wet pet food product of the present invention preferably is a wet pet food product for cats or dogs. Most preferably, the wet pet food product is a wet pet food product for cats.

The wet pet food product of the present invention may solely consist of composite meat product. In that case, the yeast extract is a component of the composite meat product. In other embodiments, the wet pet food product comprises a composite meat product in combination with sauce, and in such embodiments the yeast extract may be a component of the composite meat product and/or the sauce. Typically, the bulk of the components present in the yeast extract will end up in both the composite meat product and the sauce independent of whether the yeast extract was initially incorporated in the composite meat product or the sauce.

The composite meat product that is contained in the wet pet food preferably is solid or semi-solid, most preferably semi-solid. The composite meat product typically has a density of 0.8-1.2 g/ml.

The composite meat product preferably contains 55-90 wt.% of ground animal material, more preferably 58-88 wt.% of ground animal material and most preferably 60-87 wt.% of ground animal material.

The ground animal material may suitably contain at least 50 wt.%, more preferably at least 70 wt.% and most preferably at least 85 wt.% of animal by-product. Animal by-products are the entire bodies or parts of bodies of animals or products of animal origin not intended for human consumption, including ova, embryos and sperm. Examples of animal by-products include:
- parts of slaughtered animals which are fit for human consumption but are not intended for human consumption for commercial reasons;
- parts of slaughtered animals which are rejected as unfit for human consumption but are not affected by any sign of a communicable disease;
- hides and skins, hooves and horns, pig bristles and feathers originating from animals that are slaughtered in a slaughterhouse and were declared fit for human consumption;
- blood obtained from animals declared fit for human consumption;
- animal by-products derived from the production of products intended for human consumption, including degreased bones and greaves;
- former foodstuffs of animal origin which are no longer intended for human consumption for commercial reasons or due to problems of manufacturing or packaging defects;
- raw milk originating from animals that do not show any signs of a communicable disease;
- fish or other sea animals, except sea mammals, caught in the open sea for the purpose of fishmeal production, and fresh by-products from fish from plants manufacturing fish products for human consumption;
- shells of eggs originating from animals that do not show any signs of a communicable disease;
- blood, hides and skins, hooves, feathers, wool, horns, hair and fur originating from healthy animals.

The protein content of the composite meat product preferably is in the range of 5-30 wt.%, more preferably of 8-25 wt.% and most preferably of 10-20 wt.%.

The protein in the composite meat product preferably contains 50-90% of animal protein by weight of the total amount of protein that is contained in the composite meat product. More preferably animal protein constitutes 60-88 wt.%, most preferably 65-87 wt.% of the total amount of protein that is present in the composite meat product.

The animal protein is preferably selected from muscle meat protein, organ protein and combinations thereof. The animal protein preferably originates from vertebrates selected from mammals, fowl, fish and combinations thereof; most preferably selected from cattle, pigs, sheep, goat, rabbit, poultry, fish and combinations thereof.

The composite meat product in the wet pet food product preferably contains 2-12 wt.% vegetable material, more preferably 3-11 wt.% vegetable material, most preferably 6-10 wt.% vegetable material.

The combined amount of protein and starch that is contained in the vegetable material typically is at least 60 wt.%, more preferably at least 65 wt.% and most preferably at least 70 wt.%.

According to one embodiment, the vegetable material is a vegetable protein concentrate containing at least 30 wt.% vegetable protein, more preferably at least 50 wt.% vegetable protein, most preferably at least 70 wt.% vegetable protein.

According to another embodiment, the vegetable material is a flour containing at least 50 wt.% starch, more preferably 55-90 wt.% starch, most preferably at least 60-85 wt.% starch.

The vegetable material is obtained from cereal. Examples of vegetable materials obtained from cereal include wheat flour and gluten.

The protein in the composite meat product preferably contains at least 10% vegetable protein by weight of the total amount of protein that is contained in the composite meat product. More preferably, vegetable protein constitutes 10-50 wt.%, even more preferably, vegetable protein constitutes 12-40 wt.%, most preferably 13-35 wt.% of all the protein that is contained in the composite meat product.

As explained herein before, the vegetable material may suitably be introduced into the composite meat product of the wet pet food product in the form of a flour. Vegetable flours typically contain an appreciable amount of starch. Due to the heat treatment that is used in the preparation of the composite meat product to set the heat-settable binder, the starch contained in the composite meat product is at least partially gelatinized. Accordingly, in a preferred embodiment, the composite meat product contains gelatinized starch.

The heat settable binder in the composite meat product is preferably selected from dried blood plasma, egg albumen, cellulose ethers, starch and combinations thereof. Starch contained in the vegetable material is considered to be heat settable binder. More preferably, the heat settable binder is selected from blood plasma, cellulose ethers and combinations thereof. Most preferably, the heat-settable binder is dried blood plasma.

The heat-settable binder is typically contained in the composite meat product in a concentration of 1.2-6 wt.%, most preferably of 1.4-5 wt.%.

The composite meat product that is contained in the wet pet food product typically has a fat content of less than 15 wt.%. More preferably, said fat content is in the range of 2 to 12 wt.%, most preferably of 4 to 10 wt.%.

The fat that is contained in the composite meat product preferably contains at least 50 wt.%, more preferably at least 70 wt.% of triglycerides. The fat may suitably contain animal fat, vegetable oil, marine oil and combinations thereof. According to a particularly preferred embodiment, the fat contains at least 10 wt.%, more preferably at least 30 wt.% and most preferably at least 50 wt.% of an animal fat. The animal fat preferably originates from an animal selected from cattle, pigs, sheep, goat, poultry, fish and combinations thereof.

The composite meat product that is present in the wet pet food product contains a substantial amount of animal derived ingredients. Preferably at least 30 wt.% of the dry matter in the composite meat product is meat derived. More preferably at least 40 wt.%, most preferably 50-90 wt.% of the dry matter in the composite meat product is animal derived.

The water content of the composite meat product typically is at least 40 wt.%, more preferably 45-85 wt.% and most preferably 50-75 wt.%. **In** case the product contains a combination of composite meat product and sauce, the water content and composition of the composite meat product can suitably be determined after the composite meat product piece(s) have been separated from the sauce and the sauce sticking to the piece(s) has been rinsed off with a small quantity of hot water.

The composite meat product may suitably comprise, consist essentially of, or consist of, ground animal material and vegetable material. Or, the composite meat product may comprise, consist essentially of, or consist of, ground animal material, vegetable material, and heat settable binder. Or, the composite meat product may comprise, consist essentially of, or consist of, ground animal material, vegetable material, heat settable binder and yeast extract.

The sauce that is optionally present in the wet pet food product typically contains at least 80 wt.% water. More preferably, the water content of the sauce is in the range of 90-98 wt.%, most preferably in the range of 93-97 wt.%.

The sauce of the wet pet food product preferably is a fluid (gravy), a gel or a mousse. Gelling biopolymers that may suitably be employed to prepare gelled sauce include carrageenan, xanthan, guar gum, cassia gum, starch, gelatine and combinations thereof.

The yeast extract that is employed in the wet pet food product may be obtained from different types of yeast, such as *Saccharomyces, Pichia, Kluyveromyces, Hansenula, Candida.* The yeast extract preferably is obtained from a *Saccharomyces* yeast. Even more preferably, the yeast extract comprises, consists essentially of, or consists of yeast extract obtained from *Saccharomyces cerevisiae.* The yeast extract may comprise, consist of, or consist essentially of, extract from two types of yeast selected from the group consisting of *Saccharomyces, Pichia, Kluyveromyces, Hansenula, Candida.* Or, the yeast extract may comprise, consist essentially of, or consist of, extract from three types of yeast selected from the group consisting of *Saccharomyces, Pichia, Kluyveromyces, Hansenula, Candida.* Or, the yeast extract may comprise, consist essentially of, or consist of extract from four types of yeast selected from the group consisting of *Saccharomyces, Pichia, Kluyveromyces, Hansenula, Candida.* Or, the yeast extract may comprise, consist essentially of, or consist of extract from all five of *Saccharomyces, Pichia, Kluyveromyces, Hansenula, Candida.*

**In** accordance with another preferred embodiment the yeast extract is obtained from yeast that was produced in a brewing process.

The wet pet food product preferably contains 0.2-3.0 wt.% yeast extract. In some embodiments, the wet pet food product may include from 0.4-2.8 wt.%, or from 0.6 to 2.6 wt.%, or from 0.8 to 2.4 wt.% or from 1.0 wt.%-2.4 wt.% of yeast extract.

The wet pet food product preferably contains yeast extract and vegetable material in a weight ratio in the range of 1:5 to 1:1.

Other ingredients that may suitably be employed in the wet pet food product, in either the composite meat product, the sauce or both, include fat, antioxidants, carbohydrates, seasoning, colorants, flavouring, minerals, preservatives, vitamins, emulsifiers, farinaceous materials and combinations thereof.

The pet food product typically contains 0.1-1.0 wt.% of taurine, more preferably 0.15-0.5 wt.% of taurine. Taurine is an organic acid widely distributed in animal tissues. Taurine has many fundamental biological roles. Taurine is an essential dietary requirement for cats and dogs, since they cannot synthesize the compound. Taurine supplementation is a requirement of both the European Pet Food Industry Federation (FEDIAF) and the Association of American Feed Control Officials (AAFCO).

Expressed differently, it is preferred that the present pet food product contains 400-2000 mg taurine per 1000 kcal, more preferably 425-1200 mg taurine per 1000 kcal.

The wet pet food may preferably contain added nutrients selected from the group of vitamin B1 (thiamine), vitamin B2 (riboflavin), vitamin B6 (pyridoxine) and combinations thereof. Typically, vitamin B1 is contained in the product in a concentration of 0.1-3.0 mg per 1000 kcal. Vitamin B2 is typically present in a concentration of 0.2-4.0 mg, more preferably of 0.8-2.0 mg per 1000 kcal. Vitamin B6 content is typically in the range of 0.1-2.0 mg per 1000 kcal, more preferably in the range of 0.5-0.9 mg per 1000 kcal.

In some embodiments, the wet pet food product comprises, consists essentially of, or consists of a composite meat product, yeast extract and vitamin B1, vitamin B2 and vitamin B6. In others, the wet pet food product may also suitably comprise, consist essentially of, or consist of a composite meat product, a sauce, yeast extract and vitamin B1, vitamin B2 and vitamin B6. In some embodiments, the wet pet food product comprises, consists essentially of, or consists of a composite meat product, yeast extract and two of vitamin B1, vitamin B2 and vitamin B6. In others, the wet pet food product may also suitably comprise, consist essentially of, or consist of a composite meat product, a sauce, yeast extract and two of vitamin B1, vitamin B2 and vitamin B6. In some embodiments, the wet pet food product comprises, consists essentially of, or consists of a composite meat product, yeast extract and one of vitamin B1, vitamin B2 and vitamin B6. In others, the wet pet food product may also suitably comprise, consist essentially of, or consist of a composite meat product, a sauce, yeast extract and one of vitamin B1, vitamin B2 and vitamin B6.

In one preferred embodiment the wet pet food product contains 90-100 wt.% of the composite meat product, more preferably at least 95 wt.% of composite meat product and most preferably at least 98 wt.% of composite meat product.

In another preferred embodiment the wet pet food product is a product containing chunks of composite meat product and a sauce. Preferably, the wet pet food product contains 30-90 wt.% of the composite meat product and 10-70 wt.% of the sauce.

A process of preparing a wet pet food product as defined herein before is also provided, the process comprising:
- grinding pieces of animal material to prepare ground animal material, said animal material being selected from meat, animal by-products and combinations thereof;
- mixing the ground animal material with vegetable material, heat-settable binder, and optionally further pet food components, to prepare a slurry;
- subjecting the slurry to conditions of shear to produce an emulsion;
- forming a layer of the emulsion;
- heating the layer of emulsion to an internal temperature of at least 70°C;
- cutting or shredding the heated layer into discrete pieces of composite meat product.

The ground animal material typically constitutes 50-95 wt.% of the slurry. More preferably, the ground animal material represents 60-90 wt.%, most preferably 65-88 wt.% of the slurry.

The source of vegetable material preferably constitutes 1-15 wt.%, more preferably 3-12 wt.% and most preferably 5-10 wt.% of the slurry.

As explained herein before, protein concentrates and flours are examples of vegetable material that may be employed in the present process. In accordance with a preferred embodiment, the preparation of the slurry comprises the addition of water in order to ensure that the vegetable material is sufficiently hydrated. Typically, in the preparation of the slurry at least 80%, more preferably at 150% and most preferably at least 250% water is added by weight of the protein that is contained in the vegetable material.

The one or more optional pet food components preferably include one or more of antioxidants, carbohydrates, colourants, fats, flavouring top-notes, minerals, preservatives, vitamins, emulsifiers and combinations thereof. According to a particularly preferred embodiment, the optional one or more further components preferably include one or more ingredients selected from taurine, vitamin B1, vitamin B2, vitamin B6 and combinations thereof. Most preferably, taurine is mixed with the ground animal material and the vegetable material in the preparation of the slurry.

The slurry containing the ground animal material, the vegetable material and the heat-setting binder typically has a water content of at least 40 wt.%. More preferably, the water content of the slurry is in the range of 45-80 wt.%, most preferably in the range of 50-75 wt.%.

In the present process the slurry is converted to an emulsion by subjecting it to conditions of shear. This emulsification of the slurry is preferably carried out in bowl chopper.

The layer of the emulsion that is formed in the present process may take the form of, for instance, a sheet or a ribbon.

**In** an advantageous embodiment of the present process, the layer of emulsion is heated from below by applying steam to the underside of a continuous belt carrying said layer and/or from above by bringing steam into direct contact with the layer of the emulsion.

**In** order to activate the heat-setting binder it is preferred that the layer of emulsion is heated to an internal temperature of at least 70°C for at least 30 seconds. Even more preferably, the layer of emulsion is heated to an internal temperature of 75-105 °C for 1-60 minutes. The heating of the layer of emulsion can suitably be done in steam tunnel.

**In** the present process yeast extract may be introduced into the composite meat product and/or yeast extract may be introduced into other components of the wet pet food product, e.g. sauce. The yeast extract employed in the present process typically contains at least 10%, more preferably at least 12% nucleotides by weight of dry matter.

**In** accordance with one embodiment of the present process, yeast extract is incorporated into the emulsion before it is formed into a layer so as produce discrete pieces of composite meat product that contain the yeast extract. Preferably, the ground animal material, the vegetable material, the heat-setting binder and the yeast extract are mixed in the preparation of a slurry containing 0.4-3 wt.% of yeast extract, yet more preferably 0.8-2.8 wt.% of yeast extract, and most preferably 1.2-2.4 wt.% of yeast extract.

The pieces of composite meat product obtained in accordance with this embodiment may suitably be shaped in the form of a loaf (or paté) product that is subsequently packaged as a single piece in a container, such as a can, a pouch or a tray. Typically, these shaped pieces of composite meat product have a piece volume of 20-2,000 cm³, more preferably of 40-1,500 cm³, most preferably of 50-1,000 cm³. After packaging, the aforementioned product is preferably sterilized within the package, e.g. by retort sterilization.

Alternatively, the pieces of composite meat product may be combined with sauce to prepare a chunks-and-gravy or a chunks-and-jelly or a chunk-and-mousse type of product. Accordingly, in a preferred embodiment, the present process further comprises the steps of:
- combining the pieces of composite meat product with a sauce;
- introducing the combination into a package; and
- closing and retorting said package.

According to the invention the sauce is obtained by combining yeast extract with other sauce ingredients to produce a wet pet food product, said sauce containing 0.2-3.0 wt% yeast extract, preferably 0.4-4.5 wt.% of yeast extract, yet preferably 0.8-4.0 wt.% of yeast extract, and most preferably 1.2-3.5 wt.% of yeast extract. Also this product is preferably sterilized within the package, e.g. by retort sterilization.

Typically, a retorting temperature of 115°C to 130°C for approximately 20 to 120 minutes is satisfactory in producing a commercially sterile product.

The sauce employed in the process preferably is the sauce component of the wet pet food product as defined herein before.

The use of a wet pet food product, as described herein before, is also contemplated, such as for feeding a companion animal, especially a companion animal selected from cats and dogs, Even more preferably, the wet pet food product is used for feeding a cat.

Some embodiments will now be described in detail in the following non-limiting examples.

### Example 1

Restructured meat pieces for a wet cat food product were prepared on the basis of the recipes shown in Table 1

**Table 1**

| Ingredient | **Wt.%** |
|---|---|
| Animal by-products ¹ | 90.46 |
| Blood plasma powder | 3.50 |
| Minerals, vitamins, nutrients | 1.16 |
| Wheat protein concentrate ² | 2.00 |
| Water | 2.88 |

| | |
|---|---|
| ¹protein content 10-20 wt.% ²protein content 82 wt.%; fat content 8.5 wt.%; moisture 5 wt.% | |

The nutritional composition of the restructured meat pieces is depicted in Table 2.

**Table 2**

| Ingredient | **Wt.%** |
|---|---|
| Protein | 17.5 |
| Fat | 8.1 |
| Carbohydrate | 1.3 |
| Water | 69.4 |
| Remainder | 3.6 |

The composition of the added vitamin mixture, by weight of the final product, is shown in Table 3.

**Table 3**

| **Vitamins** / **nutrients** | **Mg/kg** |
|---|---|
| Taurine | 510 |
| Thiamine | 14.7 |
| Riboflavin | 0.7 |
| Pyridoxine | 2.5 |

The restructured meat pieces were prepared as follows. Blocks of frozen meat and meat by-products were tempered overnight before being ground. The ground meat was mixed with the dry and liquid ingredients in the proportions outlined in Table 1. Next, the mixture was emulsified in a bowl chopper. The resulting fine emulsion was transferred to a form press to produce an emulsion sheet that was passed through a steam tunnel with a residence time of two minutes. Temperature of the raw emulsion was raised to about 82°C at the steam tunnel discharge. The cooked, firm sheet so obtained was cut into slices. The dimensions of these slices were approximately 10 mm x 7 mm x 6 mm.

Next, the restructured meat pieces were combined with two different gravies having the composition described in Table 4.

**Table 4**

| | **Wt.%** | |
|---|---|---|
| **Ingredient** | **Control** | **Product 1** |
| Water | 98.73 | 95.86 |
| Yeast extract | 0 | 2.88 |
| Thickening agent | 0.80 | 0.80 |
| Caramel solution | 0.46 | 0.46 |

The chunks of composite meat product and the gravies were combined in a weight ratio of 48:52. The chunks and gravy products were packaged in pouches and retort sterilised to an Fₒ value in the range of 45 to 60.

### Example 2

A feeding trial was conducted with the two wet cat food products (Product 1 and Control) of Example 1. In these feeding trials called "two-bowl test" or "versus test" the two products were presented simultaneously to a group of cats (individual feeding station accessible via individual cat collar chip). Identical amounts of product were served in each of the two bowls. In the feeding trials the cats were twice exposed to the two products. The position of the two bowls was switched in the second exposure to avoid any bias. The quantity eaten was measured after a single meal exposure. Statistical anaylses (Analysis of variance) were made on the data to determine the statistical significance of the observed differences. The outcome of the feeding trial is summarized in Table 5.

**Table 5**

| **Variable** | **Control** | **Product 1** | **p-value** |
|---|---|---|---|
| Weight Eaten (g) | 17.4 | 44.5 | <0.01 |

### Example 3

Example 1 was repeated, except that this time the restructured meat pieces were prepared on the basis of the recipe shown in Table 6.

**Table 6**

| **Ingredient** | **Wt.%** |
|---|---|
| Animal by-products | 84.46 |
| Blood plasma powder | 3.50 |
| Minerals, vitamins & colouring | 1.16 |
| Wheat protein concentrate | 2.00 |
| Wheat flour ¹ | 6.00 |
| Water | 2.88 |

| | |
|---|---|
| ¹protein content appr. 15 wt.%; starch content appr. 65 wt.% | |

Chunk and gravy products were prepared using the same gravies as in Example 1, i.e. a gravy containing yeast extract (Product 2) and a gravy without yeast extract (Control).

A feeding trials was conducted with these two products (Product 2 and Control) using the "two-bowl test" described in Example 2. The outcome of the feeding trial is summarized in Table 7.

**Table 7**

| **Variable** | **Control** | **Product** 2 | **p-value** |
|---|---|---|---|
| Weight Eaten (g) | 15 | 48 | <0.001 |

### Example 4

Example 1 was repeated, except that this time the composite meat product was prepared on the basis of the recipe shown in Table 8.

**Table 8**

| **Ingredient** | **Wt.%** |
|---|---|
| Animal by-products | 62.85 |
| Blood plasma powder | 3.50 |
| Minerals, vitamins & colouring | 1.16 |
| Wheat protein concentrate | 2.10 |
| Wheat gluten¹ | 6.00 |
| Water | 24.39 |

| | |
|---|---|
| ¹protein content 75 wt.%; starch content 10 wt.% | |

Chunk and gravy products were prepared using the same gravies as in Example 1, i.e. a gravy containing yeast extract (Product 3) and a gravy without yeast extract (Control).

A feeding trials was conducted with these two products (Product 3 and Control) using the "two-bowl test" described in Example 2. The outcome of the feeding trial is summarized in Table 9.

**Table 9**

| **Variable** | **Control** | **Product 3** | **p-value** |
|---|---|---|---|
| Weight Eaten (g) | 21 | 60 | <0.001 |

## Claims

1. A wet pet food product comprising 20-100 wt.% of a composite meat product and 0-80 wt.% of a sauce, said composite meat product containing:
• 50-92 wt.% of ground animal material, said animal material being selected from meat, animal by-products and combinations thereof;
• 1-15 wt.% of vegetable material selected from flour, protein concentrate and combinations thereof; and
• 1-8 wt.% of heat-settable binder;
wherein the wet pet food product contains 0.2-3.0 wt.% of yeast extract; and
wherein the vegetable material is obtained from cereal; and
wherein the wet pet food product contains yeast extract and vegetable material in a weight ratio of yeast extract to vegetable material in the range of 1:5 to 1:1.

2. The wet pet food product of claim 1, wherein the heat settable binder is selected from dried blood plasma, egg albumen, cellulose ethers, starch and combinations thereof.

3. The wet pet food product according to any one of the preceding claims, wherein the vegetable material is a vegetable protein concentrate containing at least 30 wt.% of protein.

4. The wet pet food product of claim 3, wherein the vegetable material is a flour containing at least 50 wt.% starch.

5. The wet pet food product according to any one of the preceding claims, wherein the ground animal material contains at least 50 wt.% of animal by-product.

6. The wet pet food product according to any one of the preceding claims, wherein the product comprises 30-90 wt.% of the composite meat product and 10-70 wt.% of sauce.

7. The wet pet food product according to any one of the preceding claims, wherein the wet pet food product contains 0.1-1.0 wt.% taurine.

8. A process of preparing a wet pet food product according to any one of the preceding claims, the process comprising:
• grinding pieces of animal material to prepare ground animal material, said animal material being selected from meat, animal by-products and combinations thereof;
• mixing the ground animal material with vegetable material, heat-settable binder and optionally further pet food components, to prepare a slurry;
• subjecting the slurry to conditions of shear to produce an emulsion;
• forming a layer of the emulsion;
• heating the layer of emulsion to an internal temperature of at least 70°C; and
• cutting or shredding the heated layer into discrete pieces of composite meat product.

9. The process of claim 8, wherein yeast extract is incorporated into the emulsion before it is formed into a layer.

10. The process of claim 8 or 9, further comprising:
• combining the pieces of composite meat product with a sauce;
• introducing the combination into a package; and
• closing and retorting said package;
optionally wherein the sauce is obtained by combining yeast extract with other sauce ingredients.

11. The process of any one of claims 8-10, wherein the layer of emulsion is heated from below by applying steam to the underside of a continuous belt carrying said layer and/or from above by bringing steam into direct contact with the layer of the emulsion.

12. Use of a wet pet food according to any one of claims 1-7 for feeding a companion animal, wherein the companion animal is a dog or cat.

13. The wet pet food product of claim 1, wherein the yeast extract is an extract from two or more types of yeast selected from the group consisting of *Saccharomyces, Pichia, Kluyveromyces, Hansenula, Candida,* optionally wherein the yeast extract is from Saccharomyces and at least one other yeast.

14. The wet pet food product of claim 1, wherein the yeast extract is an extract of *Saccharomyces cerevisiae.*

## Patentansprüche

1. Feuchtes Haustiernahrungsprodukt, umfassend 20-100 Gew.-% eines zusammengesetzten Fleischprodukts und 0-80 Gew.-% einer Sauce, wobei das zusammengesetzte Fleischprodukt enthält:
• 50-92 Gew.-% gemahlenes tierisches Material, wobei das tierische Material aus Fleisch, tierischen Nebenprodukten und Kombinationen davon ausgewählt ist;
• 1-15 Gew.-% pflanzliches Material, ausgewählt aus Mehl, Proteinkonzentrat und Kombinationen davon; und
• 1-8 Gew.-% wärmehärtbares Bindemittel;
wobei das feuchte Haustiernahrungsprodukt 0,2-3,0 Gew.-% Hefeextrakt enthält; und
wobei das pflanzliche Material aus Getreide gewonnen wird; und
wobei das feuchte Haustiernahrungsprodukt Hefeextrakt und pflanzliches Material in einem Gewichtsverhältnis von Hefeextrakt zu pflanzlichem Material im Bereich von 1:5 bis 1:1 enthält.

2. Feuchtes Haustiernahrungsprodukt nach Anspruch 1, wobei das wärmehärtbare Bindemittel aus getrocknetem Blutplasma, Eialbumin, Celluloseethern, Stärke und Kombinationen davon ausgewählt ist.

3. Feuchtes Haustiernahrungsprodukt nach einem der vorhergehenden Ansprüche, wobei das pflanzliche Material ein pflanzliches Proteinkonzentrat ist, das mindestens 30 Gew.-% Protein enthält.

4. Feuchtes Haustiernahrungsprodukt nach Anspruch 3, wobei das pflanzliche Material ein Mehl ist, das mindestens 50 Gew.-% Stärke enthält.

5. Feuchtes Haustiernahrungsprodukt nach einem der vorangehenden Ansprüche, wobei das gemahlene tierische Material mindestens 50 Gew.-% tierisches Nebenprodukt enthält.

6. Feuchtes Haustiernahrungsprodukt nach einem der vorhergehenden Ansprüche, wobei das Produkt 30-90 Gew.-% des zusammengesetzten Fleischprodukts und 10-70 Gew.-% Sauce enthält.

7. Feuchtes Haustiernahrungsprodukt nach einem der vorhergehenden Ansprüche, wobei das feuchte Haustiernahrungsprodukt 0,1-1,0 Gew.-% Taurin enthält.

8. Verfahren zum Herstellen eines feuchten Haustiernahrungsprodukts nach einem der vorhergehenden Ansprüche, wobei das Verfahren Folgendes umfasst:
• Mahlen von Stücken tierischen Materials, um gemahlenes tierisches Material herzustellen, wobei das tierische Material aus Fleisch, tierischen Nebenprodukten und Kombinationen davon ausgewählt ist;
• Mischen des gemahlenen tierischen Materials mit pflanzlichem Material, wärmehärtbarem Bindemittel und optional weiteren Haustiernahrungskomponenten, um eine Aufschlämmung herzustellen;
• Aussetzen der Aufschlämmung gegenüber Scherbedingungen, um eine Emulsion zu erzeugen;
• Bilden einer Schicht aus der Emulsion;
• Erwärmen der Emulsionsschicht auf eine Innentemperatur von mindestens 70°C; und
• Schneiden oder Zerkleinern der erwärmten Schicht in einzelne Stücke des zusammengesetzten Fleischprodukts.

9. Verfahren nach Anspruch 8, wobei Hefeextrakt in die Emulsion eingebracht wird, bevor sie zu einer Schicht geformt wird.

10. Verfahren nach Anspruch 8 oder 9, ferner umfassend:
• Kombinieren der Stücke des zusammengesetzten Fleischprodukts mit einer Sauce;
• Einführen der Kombination in eine Verpackung; und
• Verschließen und Sterilisieren der Verpackung;
optional, wobei die Sauce durch Kombinieren von Hefeextrakt mit anderen Saucezutaten erhalten wird.

11. Verfahren nach einem der Ansprüche 8 bis 10, wobei die Emulsionsschicht von unten durch Aufbringen von Dampf auf die Unterseite eines die Schicht tragenden Endlosbandes und/oder von oben durch unmittelbares Inkontaktbringen von Dampf mit der Emulsionsschicht erhitzt wird.

12. Verwendung einer feuchten Haustiernahrung nach einem der Ansprüche 1 bis 7 zum Füttern eines Begleittiers, wobei das Begleittier ein Hund oder eine Katze ist.

13. Feuchtes Haustiernahrungsprodukt nach Anspruch 1, wobei der Hefeextrakt ein Extrakt aus zwei oder mehr Hefearten ist, ausgewählt aus der Gruppe, bestehend aus *Saccharomyces, Pichia, Kluyveromyces, Hansenula, Candida,* wobei der Hefeextrakt optional aus Saccharomyces und mindestens einer anderen Hefe stammt.

14. Feuchtes Haustiernahrungsprodukt nach Anspruch 1, wobei der Hefeextrakt ein Extrakt aus *Saccharomyces cerevisiae* ist*.*

## Revendications

1. Produit alimentaire humide pour animaux domestiques comprenant 20 à 100 % en poids d'un produit de viande composite et 0 à 80 % en poids d'une sauce, ledit produit de viande composite contenant :
• 50 à 92 % en poids de matière animale broyée, ladite matière animale étant choisie parmi la viande, les sous-produits animaux et des combinaisons de ceux-ci ;
• 1 à 15 % en poids de matière végétale choisie parmi la farine, le concentré de protéines et des combinaisons de ceux-ci ; et
• 1 à 8 % en poids de liant à prise thermique ;
dans lequel le produit alimentaire humide pour animaux domestiques contient de 0,2 à 3,0 % en poids d'extrait de levure ; et
dans lequel la matière végétale est obtenue à partir de céréales ; et
dans lequel le produit alimentaire humide pour animaux domestiques contient un extrait de levure et une matière végétale selon un rapport pondéral entre l'extrait de levure et la matière végétale dans la plage de 1:5 à 1:1.

2. Produit alimentaire humide pour animaux domestiques selon la revendication 1, dans lequel le liant à prise thermique est choisi parmi le plasma sanguin séché, l'albumen d'œuf, les éthers de cellulose, l'amidon et des combinaisons de ceux-ci.

3. Produit alimentaire humide pour animaux domestiques selon l'une quelconque des revendications précédentes, dans lequel la matière végétale est un concentré de protéines végétales contenant au moins 30 % en poids de protéines.

4. Produit alimentaire humide pour animaux domestiques selon la revendication 3, dans lequel la matière végétale est une farine contenant au moins 50 % en poids d'amidon.

5. Produit alimentaire humide pour animaux domestiques selon l'une quelconque des revendications précédentes, dans lequel la matière animale broyée contient au moins 50 % en poids de sous-produit animal.

6. Produit alimentaire humide pour animaux domestiques selon l'une quelconque des revendications précédentes, dans lequel le produit comprend 30 à 90 % en poids du produit de viande composite et 10 à 70 % en poids de sauce.

7. Produit alimentaire humide pour animaux domestiques selon l'une quelconque des revendications précédentes, dans lequel le produit alimentaire humide pour animaux domestiques contient 0,1 à 1,0 % en poids de taurine.

8. Procédé de préparation d'un produit alimentaire humide pour animaux domestiques selon l'une quelconque des revendications précédentes, le procédé comprenant :
• le broyage de morceaux de matière animale pour préparer une matière animale broyée, ladite matière animale étant choisie parmi la viande, les sous-produits animaux et des combinaisons de ceux-ci ;
• le mélange de la matière animale broyée avec une matière végétale, un liant à prise thermique et facultativement d'autres composants alimentaires pour animaux domestiques, afin de préparer une bouillie ;
• la soumission de la bouillie à des conditions de cisaillement afin de produire une émulsion ;
• la formation d'une couche de l'émulsion ;
• le chauffage de la couche d'émulsion à une température interne d'au moins 70 °C ; et
• la découpe ou le déchiquetage de la couche chauffée en morceaux discrets de produit de viande composite.

9. Procédé selon la revendication 8, dans lequel l'extrait de levure est incorporé dans l'émulsion avant qu'elle soit formée en une couche.

10. Procédé selon la revendication 8 ou 9, comprenant en outre :
• la combinaison des morceaux de produit de viande composite avec une sauce ;
• l'introduction de la combinaison dans un emballage ; et
• la fermeture et la stérilisation en autoclave dudit emballage ;
facultativement, dans lequel la sauce est obtenue par combinaison d'extrait de levure avec d'autres ingrédients de sauce.

11. Procédé selon l'une quelconque des revendications 8 à 10, dans lequel la couche d'émulsion est chauffée par le dessous en appliquant de la vapeur sur la face inférieure d'une courroie continue portant ladite couche et/ou par le dessus en amenant de la vapeur en contact direct avec la couche de l'émulsion.

12. Utilisation d'un aliment humide pour animaux domestiques selon l'une quelconque des revendications 1 à 7 pour nourrir un animal de compagnie, dans laquelle l'animal de compagnie est un chien ou un chat.

13. Produit alimentaire humide pour animaux domestiques selon la revendication 1, dans lequel l'extrait de levure est un extrait de deux types de levure ou plus choisis dans le groupe constitué par *Saccharomyces, Pichia, Kluyveromyces, Hansenula, Candida,* facultativement dans lequel l'extrait de levure provient de Saccharomyces et d'au moins une autre levure.

14. Produit alimentaire humide pour animaux domestiques selon la revendication 1, dans lequel l'extrait de levure est un extrait de *Saccharomyces cerevisiae.*
